Europäisches Patentamt

European Patent Office

Office européen des brevets

(11) Numéro de publication: **0 256 957**
**A1**

(12) **DEMANDE DE BREVET EUROPEEN**

(21) Numéro de dépôt: 87420208.8

(22) Date de dépôt: 29.07.87

(51) Int. Cl.⁴: **B 23 D 33/00**
B 21 D 43/28

(30) Priorité: 30.07.86 FR 8611478

(43) Date de publication de la demande:
24.02.88 Bulletin 88/08

(84) Etats contractants désignés:
BE CH DE ES GB IT LI

(71) Demandeur: COLLY S.A.
66/72 rue Emile-Decorps
F-69607 Villeurbanne (FR)

(72) Inventeur: Carle, Gilbert
24 chemin J.B. Gilliard
F-69300 Caluire (FR)

Cellier, Pascal
16 rue des Colibris
F-38280 Villette d'Anthon (FR)

(74) Mandataire: Maureau, Pierre et al
Cabinet GERMAIN & MAUREAU B.P. 3011
F-69392 Lyon Cedex 03 (FR)

(54) **Cisaille-guillotine à commande numérique.**

(57) Cette cisaille-guillotine est du type équipé de moyens d'approvisionnement et de positionnement automatiques des tôles à cisailler comportant, en amont de la table (2), outre des bras longitudinaux (4,4a) portés par la table (2), une poutre horizontale longitudinale s'étendant perpendiculairement au plan vertical de la table (2) et servant de glisière à un chariot (15) qui supporte lui-même une poutre horizontale transversale (16) parallèle au plan vertical de la table (2), cette poutre (16) portant des pinces (14) aptes à saisir la tôle à cisailler et à la pousser entre la lame fixe (7) et la lame verticale mobile (11) portée par le coulisseau (9), le chariot étant déplacé sous commande numérique sur sa poutre glissière en direction de la table (2).

La poutre glissière longitudinale (16) est placée sur le côté de la cisaille-guillotine et l'extrémité de la poutre transversale (13) liée au chariot (15) est articulée autour d'un axe de pivotement (22) porté par le chariot (15) de manière à lui permettre d'être pivotée entre deux positions extrêmes, à savoir une position normale d'utilisation correspondant à une utilisation de la cisaille-guillotine sous commande numérique et une position escamotée correspondant à une utilisation manuelle de cette cisaille.

FIG.1

EP 0 256 957 A1

# Description

"Cisaille-guillotine à commande numérique"

La présente invention concerne une cisaille-guillotine à commande numérique, c'est-à-dire une cisaille-guillotine plutôt destinée à découpes de tôles en grandes séries.

Les cisailles-guillotines à commande numérique actuellement connues sont équipées de moyens d'approvisionnement et de positionnement automatiques des tôles à cisailler. Ces moyens comportent généralement, en amont de la table de la cisaille et de son coulisseau mobile verticalement, outre des bras horizontaux longitudinaux portés par la table en amont de la zone de cisaillage et destinés à supporter les tôles à cisailler, une pourte horizontale longitudinale s'étendant perpendiculairement au plan vertical de la table de la cisaille et servant de glissière à un chariot qui supporte lui-même une poutre horizontale, transversale, parallèle au plan vertical de la table de la cisaille. Cette poutre transversale porte des pinces aptes à saisir la tôle à cisailler et à la pousser en direction d l'intervalle entre la lame de coupe fixe portée par la table et la lame de coupe verticalement mobile portée par le coulisseau lorsque ce dernier est en position haute, le chariot étant déplacé, sous commande numérique, sur sa poutre glissière en direction de la table.

Dans ces cisailles-guillotines connues, la poutre glissière longitudinale est placée suivant l'axe médian de la table.

Dans une variante connue de ces cisailles, il est prévu deux poutres longitudinales situées de part et d'autre de l'axe médian de la table, l'ensemble de ces deux poutres longitudinales servant de glissières à deux chariots supportant la poutre transversale.

La poutre transversale de ces cisailles-guillotines connues constitue un obstacle rendant impossible leur utilisation manuelle. Pour les travaux ponctuels ou de petite série, l'utilisateur doit donc posséder une cisaille à commande manuelle.

La présente invention vise à remédier à cet inconvénient en fournissant une cisaille-guillotine qui peut être utilisée indifféremment en commande numérique, par exemple pour de grandes séries, ou en commande manuelle, par exemple pour des travaux ponctuels ou de petite série.

A cet effet, dans la cisaille-guillotine à commande numérique qu'elle concerne et qui est du type précité, la poutre glissière longitudinale est placée sur le côté de la cisaille et l'extrémité de la poutre transversale liée au chariot est articulée autour d'un axe de pivotement, porté par le chariot, de manière à lui permettre d'être pivotée entre deux positions extrêmes, à savoir une position normale d'utilisation correspondant à une utilisation de la cisaille-guillotine sous commande numérique et une position escamotée correspondant à une utilisation manuelle de cette cisaille.

L'angle de pivotement de la poutre transversale est, de préférence, au moins égal à 90°.

Avantageusement, des moyens sont prévus pour limiter la course angulaire de la poutre transversale dans chacune de ses positions extrêmes et d'autres moyens sont prévus pour la verrouiller au moins dans sa position escamotée.

Par exemple, les moyens de verrouillage de la poutre transversale, au moins dans sa position escamotée, sont constitués par une broche engageable simultanément dans des trous transversaux de la poutre transversale et de la chape qui supporte son axe de pivotement, ces trous étant disposés coaxialement lorsque la poutre transversale est dans sa position fin de course considérée.

Avantageusement, la broche de verrouillage est montée à demeure dans l'un des bras de la chape du chariot, un ressort associé tendant constamment à la déplacer en direction de la face adjacente de la poutre transversale dans laquelle est ménagé le trou correspondant du verrouillage dans lequel elles s'engage automatiquement lorsque ce trou arrive en face de celui de la chape, c'est-à-dire lorsque la poutre transversale atteint sa position de fin de course considérée, la poutre transversale portant un poussoir à ressort de dégagement de la broche en vue de permettre le déverrouillage de la poutre transversale avant son pivotement en sens inverse pour l'amener dans son autre position extrême.

Pour éviter que le poussoir de dégagement de la broche ne gêne le pivotement de la poutre transversale en pénétrant dans le trou ménagé dans la chape du chariot, suivant une forme d'exécution intéressante de ces moyens de verrouillage, d'une part, la longueur du bouton poussoir de dégagement est telle qu'elle ne lui permet pas d'atteindre la face la plus proche du bras de la chape du chariot dans laquelle est montée la broche et, d'autre part, l'extrémité libre de cette dernière est tronconique de manière à constituer une rampe de dégagement de la broche lors du début du pivotement de la poutre transversale, depuis sa position fin de course considérée.

Suivant une première forme d'exécution de l'invention, l'axe de pivotement de la poutre transversale est parallèle à la poutre glissière. Dans ce cas, pour être amenée en position escamotée, la poutre glissière est pivotée vers le haut sur un angle au moins égal à 90°.

Dans ce cas, suivant une forme d'exécution simple de l'invention, les moyens limitant la course de relevage de la poutre transversale en position escamotée sont constitués par le bord intérieur de la face supérieure du chariot mobile sur la poutre glissière et supportant l'axe de pivotement de la poutre transversale.

De préférence, cette butée est positionnée de manière que la course angulaire de la poutre transversale, depuis sa position horizontale normale d'utilisation jusque dans sa position relevée ou escamotée, soit supérieure à 90°, ce qui lui procure, de par son propre poids, des moyens de retenue en position relevée.

Dans ce cas, pour faciliter son relevage en position escamotée et améliorer les conditions de sécurité de son utilisation, la poutre transversale est avantageusement réalisée en un matériau léger tel qu'en alliage d'aluminium, ou en un matériau composite comprenant une âme en nid d'abeille en carton ou similaire prise en sandwich entre deux plaques en résine synthétique.

Suivant une forme d'exécution simple de l'invention, les moyens limitant la course de la poutre transversale en position normale d'utilisation, c'est-à-dire en position horizontale, sont constitués par un galet d'axe horizontal et parallèle à la poutre transversale, portée par la face inférieure de cette dernière et apte à reposer, et rouler, lorsque cette dernière est en position normale d'utilisation, sur un chemin de roulement aménagé le long de l'un des bras longitudinaux de la cisaille-guillotine.

Suivant une autre caractéristique intéressante de l'invention, étant donné que la poutre transversale n'est maintenue en position horizontale que par l'effet de son propre poids, il est prévu des moyens de détection du soulèvement de la poutre transversale, aptes à commander l'arrêt de la cisaille-guillotine lorsque la poutre transversale est soulevée.

On évite ainsi un mauvais fonctionnement éventuel de la cisaille-guillotine dû, par exemple, à la présence d'un objet indésirable, tel qu'une chute de tôle, sur l'un des bras longitudinaux.

Suivant une forme d'exécution simple de l'invention, ces moyens de détection du soulèvement de la poutre transversale comprennent un palpeur en appui contre une came liée en rotation à l'axe de pivotement de la poutre transversale sur le chariot, cet axe étant lui-même lié en rotation à la poutre transversale.

Suivant une autre caractérisique de l'invention, la poutre glissière longitudinale présente, sur sa face latérale interne, un plan vertical de référence situé au niveau des tôles à cisailler et apte à servir de butée latérale de guidage des tôles lors de l'utilisation manuelle de cette cisaille-guillotine.

Lors de l'utilisation de la cisaille-guillotine avec commande numérique, une telle surface de référence n'est utile que comme butée latérale de positionnement des tôles, avant serrage des pinces. Après serrage des pinces, non seulement cette surface est inutile mais, en outre, elle risque d'être nuisible en introduisant des forces de frottement parasitaires. C'est pourquoi, suivant une autre caractéristique de l'invention, la poutre glissière longitudinale porte, latéralement et du côté de sa face interne, au moins une butée escamotable de positionnement latéral des tôles à cisailler, cette butée étant en position active lors de la présentation d'une nouvelle tôle et en position escamotée aussitôt après serrage des pinces, les mouvements de cette butée étant liés à ceux des pinces.

Dans les cisailles-guillotines à commande numérique connues, la course d'avance de la poutre transversale est limitée par les pinces qui, étant de position réglable le long de la poutre transversale, risqueraient de venir en butée contre un des dispositifs serre-tôles alignés sur toute la largeur de la table. Il en résulte donc souvent la perte d'une bande de tôle de largeur au moins égale à la largeur d'encombrement des dispositifs serre-tôles.

Pour remédier à cet inconvénient, d'une part, les points de fixation des pinces sur la poutre transversale sont alignés avec les intervalles séparant les dispositifs serre-tôles et, d'autre part, la table et le déflecteur qui recouvre éventuellement la parties supérieure de sa face tournée vers la poutre transversale présentent, dans chaque intervalle séparant deux dispositifs serre-tôles, respectivement une encoche et une échancrure permettant l'engagement d'une pince fin de course d'avance de la poutre transversale.

Il est ainsi possible d'amener les bords antérieurs des pinces très près du plan vertical de coupe et donc de limiter la perte de tôle à une bande dont la largeur correspond à l'emprise des pinces sur la tôle.

De toute façon, l'invention sera bien comprise à l'aide de la description qui suit, en référence au dessin schématique annexé représentant, à titre d'exemples non limitatifs, deux formes d'exécution de cette cisaille-guillotine :

Figure 1 en est une vue en plan par-dessus suivant une première forme d'exécution, avec escamotage de la poutre transversale par pivotement autour d'un axe horizontal et parallèle à la poutre longitudinale ;

Figure 2 est une vue en coupe suivant II-II de figure 1 ;

Figure 3 est, à échelle agrandie, une vue partielle en coupe suivant III-III de figure 2 montrant les moyens de verrouillage de la poutre transversale de l'exemple des figures 1 et 2 et les moyens de détection de son soulèvement ;

Figure 4 montre les deux moyens de positionnement du bord latéral gauche des tôles à cisailler en fonctionnement, respectivement, automatique et manuel, de la cisaille-guillotine ;

Figure 5 est une vue en coupe suivant V-V de figure 1, montrant l'une des pinces de préhension avec ses moyens d'attache rapide sur la poutre transversale ;

Figure 6 est une vue en coupe suivant VI-VI de figure 1, montrant la table de la cisaille au niveau d'une entaille et d'une échancrure pour le passage des pinces ;

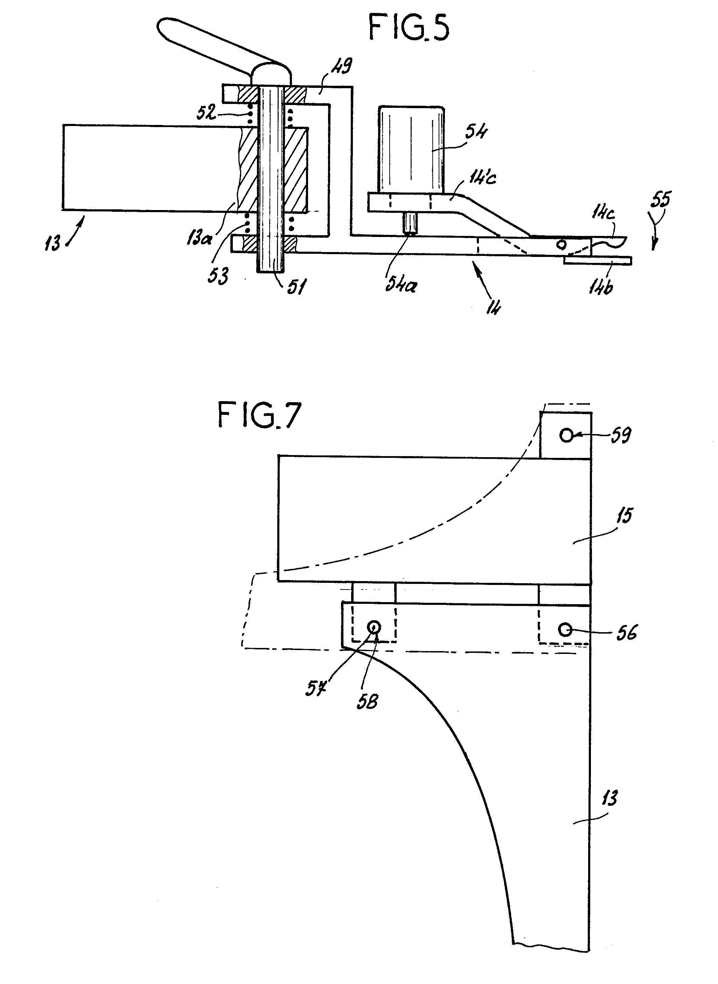

Figure 7 est une vue de dessus partielle et très simplifée d'une variante d'exécution de l'invention avec escamotage de la poutre transversale par rotation autour d'un axe vertical.

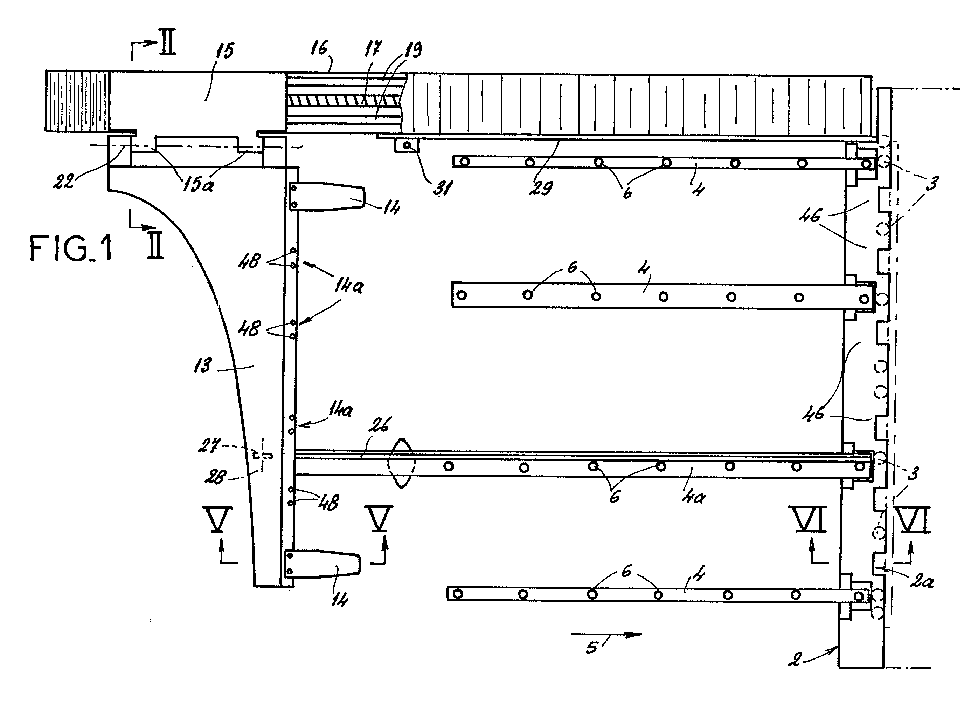

Pour plus de clarté, sur la figure 1, outre les éléments propres à l'invention, on n'a représenté, de cette cisaille-guillotine, que sa table 2, ses dispositifs serre-tôles ici constitués par des vérins 3 et les bras longitudinaux 4 portés horizontalement par la table 2, du côté de sa face amont et destinés à supporter les tôles à cisailler durant leur déplacement en direction de la table 2, c'est-à-dire dans le sens de la flèche 5. Chaque bras horizontal 4 porte des billes 6 en saillie sur sa face supérieure et dont la présence est destinée à faciliter le déplacement des tôles é cisailler sur les bras 4 en diminuant les forces de frottement.

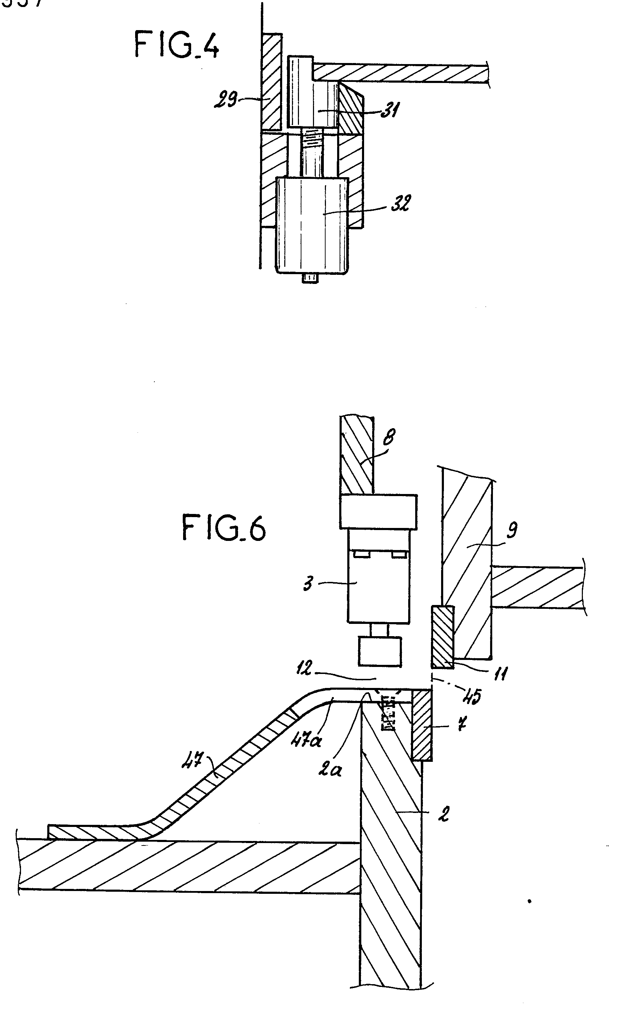

Sur la figure 6, on a représenté, outre la table 2 et la lame fixe 7 qu'elle porte ainsi que les vérins serre-tôles 3, eux-mêmes supportés par une traverse 8 du bâti de cette cisaille-guillotine, le coulisseau 9 verticalement mobile dans les deux sens et supportant la lame mobile 11.

On rappellera pour mémoire que le rôle des vérins 3 est de presser les tôles à cisailler contre la table 2 avant et pendant leur cisaillage, c'est-à-dire que les vérins 3 entrent en action avant le début de la course descendante du coulisseau 9 et ne libèrent la tôle cisaillée qu'après le début de la course ascendante du coulisseau 9.

Dans une cisaille-guillotine à commande numérique, les tôles à cisailler sont déplacées automatiquement et sur la course désirée en direction de l'intervalle 12 séparant le dessus de la table 2 et les extrémités libres des pistons des vérins serre-tôles 3, intervalle qui coïncide avec celui séparant la lame fixe 7 de la lame mobile 11 avant chaque opération de cisaillage par une poutre transversale 13 qui supporte, sur sa face verticale antérieure, des pinces 14 aptes à saisir les tôles à cisailler après qu'elles aient été correctement positionnées, c'est-à-dire mises d'équerre en étant supportées par les bras horizontaux 4.

Pour cela, chaque tôle à cisailler est déplacée par des moyens d'approvisionnement, non représentés sur le dessin, parallèlement à la table 2 jusqu'a venir en contact avec une butée latérale, puis la poutre transversale 13 est déplacée en direction de la table 2 et, par conséquent, de la tôle à cisailler préalablement approvisionnée, c'est-à-dire dans les sens de la flèche 5, avec ses pinces 14 ouvertes. Lorsque les pinces 14 sont totalement engagées sur la tôle à cisailler, elles sont refermées et maintiennent rigidement la tôle, rendant alors inutile le maintien de la présence de la butée latérale précitée.

Dans les cisailles actuellement connues, la poutre transversale 13 est portée par un chariot 15 mobile sur une poutre longitudinale 16 lui servant de glissière et comportant des moyens d'entraînement et de guidage du chariot 15 dans les deux sens, ces moyens étant généralement constitués par une vis mère 17 liée en rotation par une chaîne ou courroie sans fin 20 à un moteur électrique d'entraînement 30 etengagée dans un écrou immobile en rotation 18 du chariot 15, et par des colonnes de guidage 19 engagées dans des paliers à billes 21 portés par le chariot 15.

Selon l'invention, pour permettre l'utilisation de cette cisaille-guillotine en fonctionnement manuel, c'est-à-dire sans la commande numérique et, par conséquent, sans utiliser la poutre transversale 13, et pour éviter que cette dernière ne constitue un obstacle à une telle utilisation, cette poutre transversale 13 est articulée autour d'un axe porté par la face latérale interne du chariot 15, cet axe permettant de pivoter la poutre transversale 13 entre une position horizontale normale d'utilisation et une position escamotée.

Dans l'exemple illustré sur les figures 1 à 3, l'axe de pivotement 22 de la poutre transverale 13 est porté horizontalement par une chape 15a solidaire de la face latérale interne du chariot 15, de telle sorte que, pour être déplacée en position escamotée, la poutre transversale 13 doit être pivotée vers le haut dans le sens de la flèche 23, jusque dans son autre position extême qu'elle atteint après un pivotement d'un angle 24 autour de l'axe de pivotement 22.

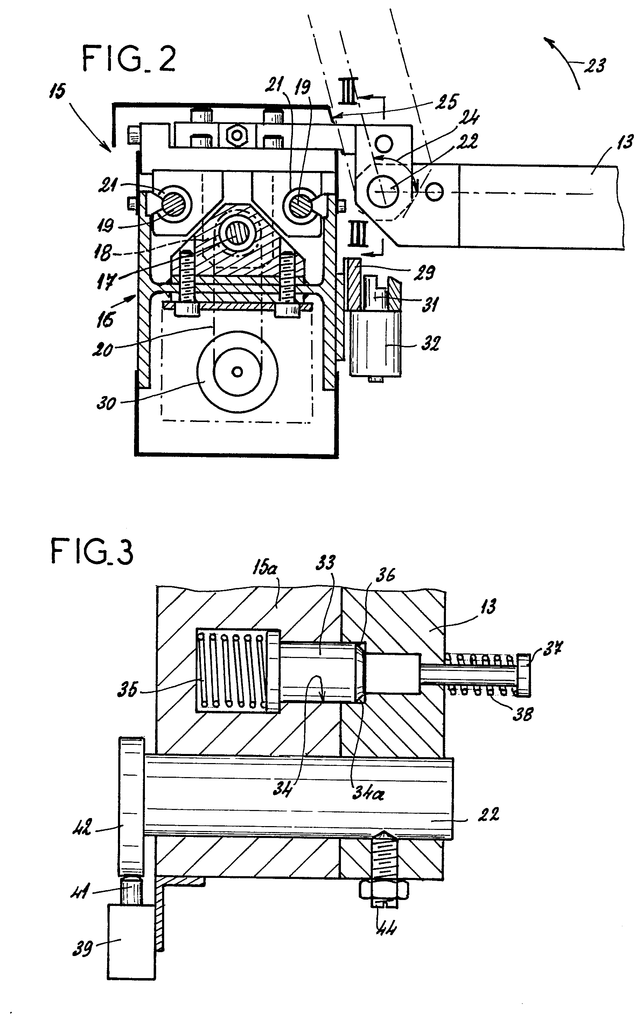

Comme cela ressort de la figure 2, la butée fin de course en position escamotée de la poutre transversale, position représentée en traits mixtes sur cette figure 2, est constituée par le bord supérieur 25 de la face latérale interne du chariot 15 et cette butée est disposée de telle sorte que l'angle de pivotement 24 de la poutre transversale 13, depuis sa position horizontale normale d'utilisation, est supérieur à 90°. Cette disposition procure à la poutre transversale 13 un équilibre stable, même en position escamotée.

La butée fin de course de l'autre position extême de la poutre transversale 13 est constituée par l'un 4a des bras horizontaux 4 de la cisaille sur la face supérieure duquel est amnéagé un chemin de roulement 26 sur lequel prend appui un galet 27 d'axe horizontal 28 parallèle à la poutre transversale 13 qui le porte, ce galet 27 faisant légèrement saillie sous la face inférieure de cette dernière.

Naturellement, la face supérieure du chemin de roulement 26 doit être à un niveau inférieur à celui du sommet des billes 6 du bras 4a considéré.

On conçoit aisément que, lorsqu'elle est en position escamotée telle qu'illustrée en traits mixtes sur la figure 2, la poutre transversale 13 ne constitue plus un obstacle à l'utilisation de cette cisaille-guillotine en fonctionnement manuel.

Pour faciliter l'utilisation de cette cisaille-guillotine en fonctionnement manuel, c'est-à-dire lorsque les pinces 14 ne sont pas utilisées, pout positionner correctement d'équerre chaque tôle à cisailler, une butée de positionnement et de guidage 29 est aménagée sur la face latérale interne du chariot 15. Dans l'exemple illustré sur le dessin, et notamment sur les figures 1 et 2, cette butée latérale 29 est constituée par un profilé plat rapporté contre la face considérée du chariot 15.

Comme indiqué précédemment, cette butée latérale de positionnement et de guidage 29 ne peut être utilisée en fonctionnement automatique de cette cisaille-guillotine car, après serrage des pinces 14, non seulement elle devient inutile, mais elle risque d'être gênante puisqu'elle risque d'engendrer des forces de frottement et de coincement indésirables. Pour cette raison, dans la cisaille-guillotine selon l'invention, il est prévu une butée latérale de positionnement escamotable.

Dans l'exemple illustré sur le dessin, cette butée escamotable est constituée par un taquet 31 porté par vérin 32 mécanique, pneumatique, électrique ou hydraulique et permettant de le déplacer d'une position escamotée telle qu'illustrée sur la figure 2, à une position sortie d'utilisation telle qu'illustrée sur la figure 4.

Ce taquet 31 n'étant utile qu'avant la fermeture des pinces 14, son vérin de commande 32 est asservi aux moyens de commande du serrage des pinces 14 de manière qu'il soit ramené en position escamotée ausitôt après le serrage des dites pinces.

Il a été indiqué précédemment qu'en donnant à l'angle 24 de pivotement de la poutre transversale 13 une valeur supérieure à 90°, on procurait à cette dernière une stabilité certaine en position escamotée. Cependant, on comprendra aisément que, pour des raisons de sécurité, il est préférable que, dans cette position escamotée, la poutre transversale 13 puisse être verrouillée de façon positive.

La figure 3 illustre une forme d'exécution des moyens de verrouillage de la poutre transversale 13 en position escamotée. Cette figure partielle montre, à échelle agrandie, l'un des bras de la chape 15a du chariot 15, l'axe de pivotement 22 de la poutre transversale 13 et une partie de paroi de cette dernière. A l'intérieur du bras considéré de la chape 15a est logée, à demeure, une broche 33 mobile axialement dans un trou 34 aménagé dans la face interne du bras de chape 15a et débouchant sur sa face en contact avec la partie de paroi considérée de la poutre transversale 13. Un ressort 35 associé à la broche 33 tend à maintenir constammement l'extrémité libre de cette dernière en saillie à l'extérieur du trou 34, c'est-à-dire en saillie par rapport à la face de ce bras de chape 15a en contact avec la poutre transversale 13. La partie de paroi précitée de la poutre transversale 13 en contact avec la face considérée du bras de chape 15a s'oppose normalement à cette saillie. Cependant, sur sa face en contact avec le bras de chape 15a, cette partie de paroi de la poutre transversale 13 présente, à son tour, un trou 36 de même diamètre que le trou 34 et, par conséquent, apte à loger l'extrémité en saillie de la broche 33. Ce trou 36 est disposé sur la poutre transversale 13 de manière à être coaxial au trou 34 lorsque la poutre transversale 13 est dans sa position escamotée, comme illustré en traits mixtes sur la figure 2.

On conçoit aisément que, lorsque la poutre transversale 13 arrive dans cette position, l'extrémité libre de la broche 33 est engagée, par son ressort 35, dans le trou 36, verrouillant alors la poutre transversale 13 en position escamotée. Comme le montre la figure 3, cette dernière porte un bouton poussoir de dégagement 37 normalement maintenu en position escamotée par un ressort 38 et permettant de repousser la broche 33 hors du trou 36 de la poutre transversale 13 et, par conséquent, de la déverrouiller de sa position escamotée. Pour éviter que le bouton poussoir 37 ne constitue, à son tour, en position active, un organe de verrouillage de la poutre transversale 13 en position escamotée, sa longueur est telle que, même en position active extrême, il ne peut pas pénétrer dans le trou 34 du bras de chape 15a, tandis que l'extrémité libre 34 de la broche 34 est conformée en tronc de cône dont la pente a pour effet de permettre son effacement sous l'action du bord du trou 36 de la poutre transversale 13.

Dans la forme d'exécution illustrée par les figures 1 à 3 du dessin et selon laquelle l'axe d'articulation 22 de la poutre transversale 13 est horizontal, il n'est pas prévu de moyens de verrouillage de cette poutre transversale 13 en position horizontale normale d'utilisation. Rien ne s'oppose donc à ce que la poutre transversale 13 soit soulevée dans le sens de la flèche 23 au cours de fonctionnement automatique de la cisaille-guillotine, notamment par la présence intempestive d'un objet indésirable, tel qu'une chute de tôle ou autre, sur l'un ou l'autre des bras horizontaux 4 ou 4a.

Pour remédier à cet inconvénient, selon l'invention, il est prévu des moyens de détection du soulèvement intempestif de la poutre transversale 13, moyens qui sont aptes à commander aussitôt l'arrêt de la cisaille-guillotine.

Dans l'exemple illustré le dessin, ces moyens sont constitués par un contacteur 30 dont le palpeur 41 est au contact d'une came 42 portée par l'axe de pivotement 22 de la poutre transversale 13 auquel elle est liée en rotation. En outre, l'axe de pivotement 22 est lié en rotation à la poutre transversale 13, par exemple au moyen d'une vis pointeau 44.

On conçoit aisément qu'un soulèvement de la poutre transversale 13 aura pour effet d'entraîner en rotation l'axe 22 et la came 42, et cette rotation sera immédiatement décelée par le palpeur 41 du contacteur 39 qui pourra, de ce fait, commander immédiatement l'arrêt de la cisaille-guillotine.

Pour diminuer l'importance des chutes de tôle en permettant aux pinces 14 de s'engager au plus près du plan vertical de cisaillage 45, qui est le plan vertical commun des arêtes tranchantes des lames fixe 7 et mobile 11, d'une part, les pinces 14 sont alignées avec les intervalles 46 séparant les vérins serre-tôles 3 et, d'autre part, le bord supérieur de la table 2 présente des encoches 2a et le déflecteur 47, qui habille éventuellement le bord supérieur de la table 2 pour assurer le guidage du bord antérieur des tôles à cisailler, présente des échancrures 47a dans lesquelles les pinces 14 peuvent s'engager. Etant donné que la position des pinces 14 sur la poutre transversale 13 est déterminée par les dimensions des tôles à cisailler, la position de chaque pince 14 doit pouvoir être modifiée le long de la poutre transversale 13. Pour cette raison et compte tenu de ce qui précède, sur toute la longueur de la poutre transversale 13 sont aménagés des emplacements prédéterminés 14a des pinces 14, chacun de ces emplacements 14a coïncidant éventuellement avec l'un des intervalles précités 46 entre vérins serre-tôles 3.

Avantageusement, chaque pince 14 est équipée de moyens de fixation rapide au bord antérieur 13a de la poutre transversale 13.

Dans l'exemple illustré sur le dessin, et plus particulièrement par la figure 5, chaque emplacement prédéterminé 14a d'une pince 14 sur le bord antérieur 13a de la poutre transversale 13 est constitué par une paire de trous verticaux 48 et chaque pince 14 présente, à son extrémité postérieure, une chape 49 supportant deux broches amovibles 51 qui est apte, après retrait des broches 51, à être engagée sur l'un des emplacements 14a de la poutre transversale 13 et à être fixée, par engagement des broches 51, à la fois dans les trous de la chape 49 et les trous 48 de l'emplacement 14a considéré. Des ressorts 52 et 53 procurent aux pinces 14 une certaine mobilité verticale éliminant les risques de génération de contraintes dangereuses.

Comme le montre cette même figure 5, chaque pince 14 présente une mâchoire inférieure fixe 14b et une mâchoire supérieure mobile 14c. Chaque mâchoire supérieure mobile 14c présente un talon 14'c supportant un vérin mécanique, électrique, pneumatique ou hydraulique 54 dont l'équipage mobile 54a est en appui contre la face supérieure de corps de pince 14 dont est solidaire la mâchoire fixe 14b. On conçoit aisément qu'en provoquant la sortie de l'équipage mobile du vérin 54, on provoque le pivotement de la mâchoire mobile 14c de la pince 14 dans le sens de la flèche 55 et, par conséquent, le serrage de la pince.

Le relevage de la poutre transversale 13 de sa position horizontale d'utilisation dans sa position escamotée, peut être effectué d'autant plus facilement qu'elle est réalisée en un matériau léger. C'est pourquoi cette poutre 13 est avantageusement réalisée en alliage léger d'aluminium ou encore en résine synthétique éventuellement pourvue d'une âme en nid d'abeille en carton ou similaire.

Dans l'exemple qui vient d'être décrit, l'axe 22 de pivotement de la poutre transversale 13 est horizontal. On peut évidemment concevoir une autre form d'exécution de cette cisaille-guillotine selon laquelle au lieu d'être horizontal, l'axe de pivotement 56 de la poutre horizontale 13 est vertical ; cette forme d'exécution est succinctement représentée sur la figure 6. Il va de soi que, dans ce cas, la poutre transversale 13 doit être verrouillée dans chacune de ses deux positions extrêmes, ce verrouillage pouvant être obtenu tout simplement par une broche verticale 57 portée par la poutre transversale 13 et engageable dans l'un des deux trous verticaux 58 et 59 aménagés à cet effet sur le chariot 15, chaque trou 58 ou 59 correspondant à l'une des positions extrêmes de la poutre transversale 13.

**Revendications**

1.- Cisaille-guillotine à commande numérique, de type équipé de moyens d'approvisionnement et de positionnement automatiques de tôles à cisailler comportant, en amont de la table (2) de la cisaille et de son coulisseau (9) mobile verticalement, outre des bras longitudinaux (4, 4a) portés par la table (2) en amont de la zone de cisaillage (45), une poutre horizontale longitudinale s'étendant perpendiculairement au plan vertical de la table (2) et servant de glissière à un chariot qui supporte lui-même une poutre horizontale transversale parallèle au plan vertical de la table (2), cette poutre transversale portant des pinces (14) aptes à saisir la tôle à cisailler et à la pousser entre la lame fixe (7) portée par la table (2) et la lame verticalement mobile (11) portée par le coulisseau (9) lorsque ce dernier est en position haute, le chariot étant déplacé sous commande numérique sur sa poutre glissière en direction de la table (2), caractérisée en ce que la poutre glissière longitudinale (16) est placée sur le côté de la cisaille-guillotine et l'extrémité de la poutre transversale (13) liée au chariot (15) est articulée autour d'un axe de pivotement (22) porté par le chariot (15) de manière à lui permettre d'être pivotée entre deux positions extrêmes, à savoir une position normale d'utilisation correspondant à une utilisation de la cisaille-guillotine sous commande numérique et une position escamotée correspondant à une utilisation manuelle de cette cisaille.

2.- Cisaille-guillotine selon la revendication 1, caractérisée en ce que l'angle de pivotement de la poutre transversale (13) est, de préférence, au moins égal à 90°.

3.- Cisaille-guillotine selon la revendication 1 ou la revendication 2, caractérisée en ce que des moyens sont prévus pour limiter la course angulaire de la poutre transversale (13) dans chacune de ses positions extrêmes.

4.- Cisaille-guillotine selon l'une quelconque des revendications 1 à 3, caractérisée en ce que des moyens sont prévus pour verrouiller la poutre transversale (13) au moins dans sa position escamotée.

5.- Cisaille-guillotine selon la revendication 4, caractérisée en ce que les moyens de verrouillage de la poutre transversale (13), au moins dans sa position escamotée, sont constitués par une broche (33) engageable simultanément dans des trous transversaux (36) de la poutre transversale (13) et de la chape (15a) qui supporte son axe de pivotement (22), ces trous étant disposés coaxialement lorsque la poutre transversale (13) est dans sa position fin de course considérée.

6.- Cisaille-guillotine selon l'une quelconque des revendications précédentes, caractérisée en ce que l'axe de pivotement (22) de la poutre transversale (13) est parallèle à poutre glissière (16).

7.- Cisaille-guillotine selon la revendication 6, caractérisée en ce que les moyens limitant la course de relevage de la poutre transversale (13) en position escamotée sont constitués par le bord intérieur (25) de la face supérieure du chariot (15) mobile sur la poutre glissière (16) et supportant l'axe de pivotement (22) de la poutre transversale (13).

8.- Cisaille-guillotine selon la revendication 7, caractérisée en ce que la butée (25) est positionnée de manière que la course angulaire (24) de la poutre transversale (13), depuis sa position horizontale normale d'utilisation jusque dans sa position relevée ou escamotée, soit supérieure à 90°, ce qui lui procure, de par son propre poids, des moyens de retenue en position relevée.

9.- Cisaille-guillotine selon l'une quelconque des revendications 6 à 8, caractérisée en ce que la poutre transversale (13) est réalisée en un matériau léger tel qu'en alliage d'aluminium, ou en un matériau composite comprenant une âme en nid d'abeille en carton ou similaire prise en sandwich entre deux plaques de résine synthétique.

10.- Cisaille-guillotine selon l'une quelconque des revendications 6 à 9, caractérisée en ce que les moyens limitant la course de la poutre transversale (13) en position d'utilisation, c'est-à-dire en position horizontale, sont constitués par un galet (27) d'axe (28) horizontal et parallèle à la poutre transversale (13), portée par la face inférieure de cette dernière et apte à reposer, et rouler, lorsque cette dernière est en position normale d'utilisation, sur un chemin de roulement (26) aménagé le long de l'un (4a) des bras longitudinaux (4) de la cisaille-guillotine.

11.- Cisaille-guillotine selon l'une quelconque des revendications 6 à 10, caractérisée en ce qu'il est prévu des moyens de détection du soulèvement de la poutre transversale (13), aptes à commander l'arrêt de la cisaille-guillotine lorsque la poutre transversale (13) est soulevée.

12.- Cisaille-guillotine selon la revendication 11, caractérisée en ce que les moyens de détection du soulèvement de la poutre transversale (13) comprennent un palpeur (41) de contacteur (39) en appui contre une came (42) liée en rotation à l'axe de pivotement (22) de la poutre transversale (13) sur le chariot (15), cet axe (22) étant lui-même lié en rotation à la poutre transversale (13).

13.- Cisaille-guillotine selon l'une quelconque des revendications précédentes caractérisée en ce que la poutre glissière longitudinale (16) présente, sur sa face latérale interne, un plan vertical de référence (29) situé au niveau des tôles à cisailler et apte à servir de butée latérale de guidage des tôles lors de l'utilisation manuelle de cette cisaille-guillotine.

14.- Cisaille-guillotine selon l'une quelconque des revendications précédentes, caractérisée en ce que la poutre glissière longitudinale (16) porte, latéralement et du côté de sa face interne, au moins une butée escamotable (31) de positionnement latéral des tôles à cisailler, cette butée (31) étant en position active lors de la présentation d'une nouvelle tôle et en position escamotée aussitôt après serrage des pinces (14), les movements de cette butée (31) étant liés à ceux des pinces (14).

15.- Cisaille-guillotine selon l'une quelconque des revendications précédentes, caractérisée en ce que, d'une part, les emplacements (14a) de fixation des pinces (14) sur la poutre transversale (13) sont alignés avec les intervalles (46) séparant les dispositifs serre-tôles (3) et, d'autre part, la table (2) et le déflecteur (47) qui recouvre éventuellement la partie supérieure de sa face tournée vers la poutre transversale (13) présentent, dans chaque intervalle (46) séparant deux dispositifs serre-tôles (3), respectivement une encoche (2a) et une échancrure (47a) permettant l'engagement d'une pince (14) en fin de course d'avance de la poutre transversale (13).

FIG.1

0256957

# FIG. 2

# FIG. 3

0256957

FIG.4

29
31
32

FIG.6

8
9
3
12
11
45
47a
7
47
2a
2

0256957

# FIG.5

# FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 297 927 (KURODA)<br>* En entier *<br>--- | 1 | B 23 D 33/00<br>B 21 D 43/28 |
| A | US-A-2 278 921 (FISCHER)<br>--- | | |
| A | DE-A-2 444 231 (TAYLOR)<br>--- | | |
| A | FR-A-1 212 542 (SIEMAG GmbH)<br>----- | | |

**DOMAINES TECHNIQUES RECHERCHES (Int. Cl.4)**

B 23 D
B 21 D

Le présent rapport a été établi pour toutes les revendications

| Lieu de la recherche | Date d'achèvement de la recherche | Examinateur |
|---|---|---|
| LA HAYE | 10-11-1987 | BERGHMANS H.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P0402)